# EUROPEAN PATENT SPECIFICATION

(11) **EP 1 650 997 B1**
(45) Date of publication and mention of the grant of the patent: **26.09.2007**
(21) Application number: 04292496.9
(22) Date of filing: 20.10.2004
(51) Int. Cl.: H04Q 7/38

(54) **A method, an access point, a telecommunication device, a server and an information system for providing and for retrieving within a telecommunication network available network connection types**
Verfahren, Zugangspunkt, Telekommunikationsvorrichtung, Server und Informationssystem zur Herstellung und zum Auffinden von, in einem Telekommunikationsnetzwerk, verfügbaren Netzverbindungssorten
Méthode, point d'accès, dispositif de télécommunication, serveur et système d'information pour fournir et pour récupérer dans un réseau de télécommunication des types de connexion de réseau disponibles

(43) Date of publication of application: 26.04.2006
(73) Proprietor: Alcatel Lucent, 75008 Paris (FR)
(72) Inventor: Gebert, Jens, 71720 Oberstenfeld (DE); Sigle, Rolf, 73630 Remshalden (DE); Lapraye, Bertrand, 91190 Gif sur Yvette (FR)
(74) Representative: Brose, Gerhard

(56) References cited:
- US-A1- 2004 139 049
- US-A1- 2004 185 850
- US-A1- 2004 202 940

## Description

The present invention relates to methods for providing and for retrieving within a telecommunication network available network connection types, especially for wireless telecommunication networks. The invention further relates to a server, an information system, a telecommunication device, and an access point.

Today's mobiles and in general all radio networking devices provide a plurality of connection types comprising a certain media diversity like optical interfaces as well as radio interfaces, as well as several standardized wireless access technologies, e.g. Bluetooth, GSM (Global System for Mobile communications), GPRS (General Packet Radio Service), UMTS (Universal Mobile Telecommunications System), WiFi (Wireless Fidelity), WiMAX (Worldwide Interoperability for Microwave Access), etc.

All these mobile devices share a common property. For instance within UMTS, after switching on, the user equipment, the terminology for a mobile in UMTS, selects a Public Land Mobile Network (PLMN), then a cell, and after that it performs a location registration, see e.g. 3GPP TS 25.304 "UE procedures in Idle Mode and Procedures for Cell Reselection in Connected Mode". In 3GPP TS 23.122 "NAS Functions related to Mobile Station (MS) in idle mode" the mobile station seeks for a suitable cell of the chosen PLMN and chooses that cell to provide available services, and tunes to its control channel. Within another technology, the WiFi, ANSI/IEEE Std 802.11, 1999 Edition "Information technology - Telecommunications and information exchange between systems - Local and metropolitan area networks - Specific requirements - Part 11: Wireless LAN Medium Access Control (MAC) and Physical Layer (PHY) Specifications" two methods of scanning: active and passive scanning, are specified. IEEE 802.11 b defines more details on the scanning for connections, e.g. scan 13 possible channels in Europe, scan 11 channels in USA, etc.

US patent 5,950,130 discloses a method of intelligent roaming wherein a Systems Access List (SAL), programmed into the memory of a mobile station over-the-air or via a physical interface, is used to select a preferred system for service. When the mobile station is powered on, it scans the home band first, then a secondary band if a control channel is not found on the home band. If the mobile station determines that it is located in its home system, it remains on that band and obtains service from the home system. If the mobile station is not located within its home system, the SAL is searched to determine if there is a preferred system in the same area as the current system. If not, then the mobile station obtains service on the current system. If the SAL indicates there is a preferred system in the same area as the current system, then the SAL also indicates the exact band(s) where a preferred system may be located. The SAL may include information on the blocks of channels to scan. The SAL may indicate the air interface technology supported on each of the preferred bands, to assist the mobile station in finding a system of a given technology type.

For the inter-working between a wireless local area network (WLAN) and UMTS, information is provided in a UMTS broadcast channel to indicate the availability of WLAN access.

In order to cope with different radio access technologies scanning for access and access technologies, in general access connection types, is applied.

Throughout this application connection type is understood to subsume any kind of standard for access technology, regardless concerning the bandwidth, the medium, i.e. radio or infra red or optical, the coding, the technology etc. The access point is understood to subsume any kind of network connection providing access unit like a base station, a node B, a WiFi access node, a Bluetooth node etc.

In future the mobiles have to cope with an increasing number of available access types. Today's mobiles even support a variety of access technologies. When applying the current scanning solution, exemplary outlined above, the mobile has to scan for instance the radio coverage available on any of these radio technologies. This scanning on each e.g. radio interface is time and energy consuming, which leads to a reduction of the standby time and phone-time of a battery powered mobile phone.

A mobile unit, a server and a method of providing information is disclosed in United States Patent Application US2004/0185850. There mobile unit is capable of communication using a plurality of communication subsystems. A usability determination section determines usability of the plurality of communication subsystems at the current location of the mobile unit based on the electrical field intensity of a wireless LAN and the electrical field intensity of a mobile unit telephone network. A communication subsystem selection section selects o communication subsystem whereby the current location can be measured with highest accuracy, of the communication subsystems that are determined as being usable.

The problem is a fast and effective retrieval of possibly available access technologies at a given location.

This problem is solved by a method for retrieving within a telecommunication network available network connection types at a given location provided by access points by means of a telecommunication network device, where an access point provides information about its coverage and its connection type to an information system, the available network connection types at a given location are stored in an information system, the telecommunication network device establishes at least one connection towards said information system, and queries for available network connection types using the given location.

And the problem is solved by a method for providing within a telecommunication network available network connection types at a given location provided by access points, where an access points provides its location and its provided connection type in an information system for retrieving available network connection types for a given location.

And the problem is solved by an information system comprising a server, comprising means for storing available network connection types per location, for retrieving and providing within a telecommunication network available network connection types according to the above methods.

An access point comprising means for providing its location correspondingly solves the problem and it's provided connection type to an information system for retrieving available network connection types for a given location.

And a telecommunication device comprising means for retrieving within a telecommunication network available network connection types solves the problem.

In other words, the problem is solved by a collaboration, i.e. to retrieve a list of available access technologies, i.e. available connection types, for a given geographical location or position using a technology independent information system, that might be realized by a distributed database.

A mobile (access) device requires at least one connection of a first initial type, e.g. GPRS, towards the information system. The position information of the mobile is provided to the information system. This information might be rendered by GPS (global positioning system) or as an attribute of the initial connection, e.g. a cell number of the GPRS network. The information system retrieves potential access technologies, i.e. connection types provided by other (available) access points covering the provided position.

Each access point, e.g. a base station, a node B, a mobile relay, etc. can update the database of the information system with its location, coverage area and/or covered locations, supported access technologies and optionally additional parameters about the access technology. These updates are uniformly treated as (potential) connection type.

Additional parameters can contain for example information about used frequencies, channels, spreading codes, broadcast channel identifiers, ...

The form of a query might even not strictly location or position based but instead lazy, e.g. find all connection types within a certain area, e.g. a neighboring location, or find all connection types where there is an intersection with the coverage of the current (initial) access point.

The response might contain a list of possibly available radio access technologies at that location and optionally the above described additional parameters.

This information can be used for mobility management and handover decisions.

Preferably efficient distributed databases are used as information system to store the connection type information per location. The database structure (or scheme) reflects preferable the physical (location) arrangement homomorphical.

In a special realization of this invention, the domain name system (DNS) might be used as database, where the geographical position or even the coverage is presented as a domain name. A terminal or network element can identify the available access points by domain names corresponding to the (given) geographical position.

Accordingly, it is an object and advantage of the present invention to avoid the scanning effort for identifying all possible access technologies, i.e. seeking on all frequencies, trying different sets of parameters, etc. which is time and energy consuming.

Another advantage of the present invention is to provide an efficient retrieval by decomposing the whole information of global coverage - which is large - into small locally parts carrying the neighboring environment The resulting scalability and the overall performance of the system can even be improved when using a distributed databases. At least one connection to the network is necessary to use the database. And such a connection might even be standardized in order to avoid each and every scanning.

A further advantage of the present invention is the uniformity, of the approach, i.e. suited for the diversity of known wireless access network types. It applies and is intended to all kind of wireless connection technologies and types.

These and many other objects and advantages of the present invention will become apparent to those of ordinary skill in the art from a consideration of the drawings and ensuing description, where
Figure. 1 is a schematic drawing of an access network environment showing access nodes and a telecommunication device according to the invention.
Figure. 2 shows a schematic drawing of information maintained in the information system according to the methods of the invention.
Figure. 3 shows a schematic drawing of relevant information for the telecommunication device according to the invention.
Figure. 4 illustrate the collaboration according the method for providing within a telecommunication network available network connection types according to the invention.
Figure. 5 illustrate the collaboration according the method for retrieving within a telecommunication network available network connection types according to the invention.

Those of ordinary skill in the art will realize that the following description of the present invention is illustrative only and is not intended to be in any way limiting. Other embodiments of the invention will readily suggest themselves to such skilled persons from an examination of the within disclosure.

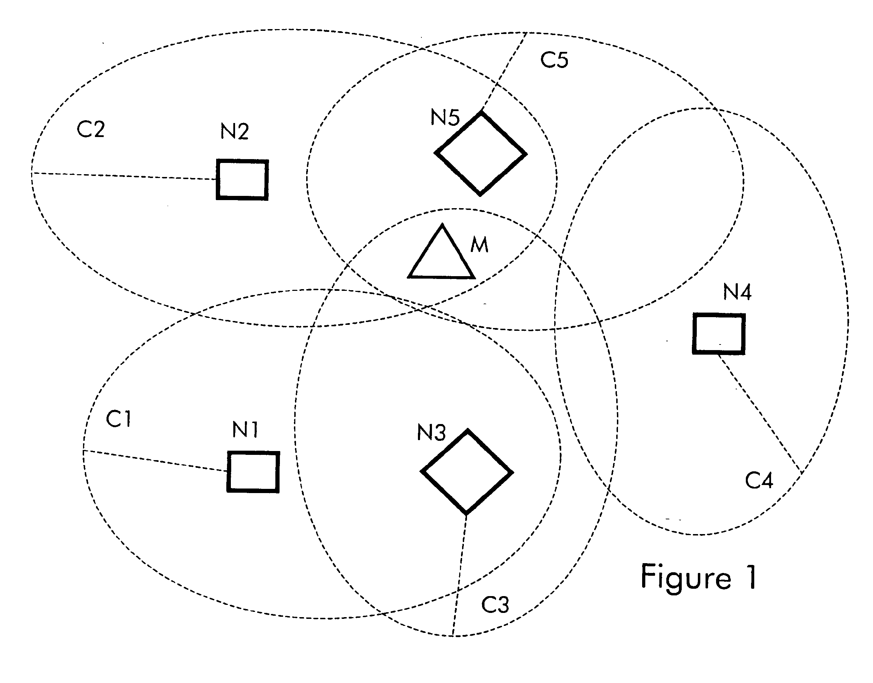

Figure. 1 shows a schematic view of a (radio) access network comprising five access nodes N1, ... , N5 of two types, shown by squares. Each access node N1, ... , N5 has for simplicity reasons an elliptic coverage C1, ..., C5, respectively, shown by the dashed with its access node linked ellipse. The figure also shows a telecommunication device M, a mobile, say. The mobile is in the coverage of a certain subset of the access nodes, namely N5, N2, and N3. It is outside the coverage of N1 and N4.

When the mobile is within the coverage of an access node it is able to establish a connection with that access node. To identify a reachable access node, i.e. an access node having a coverage that overlap (or cover) the mobiles position.

In the prior art this is done by scanning the communication media for certain signals.

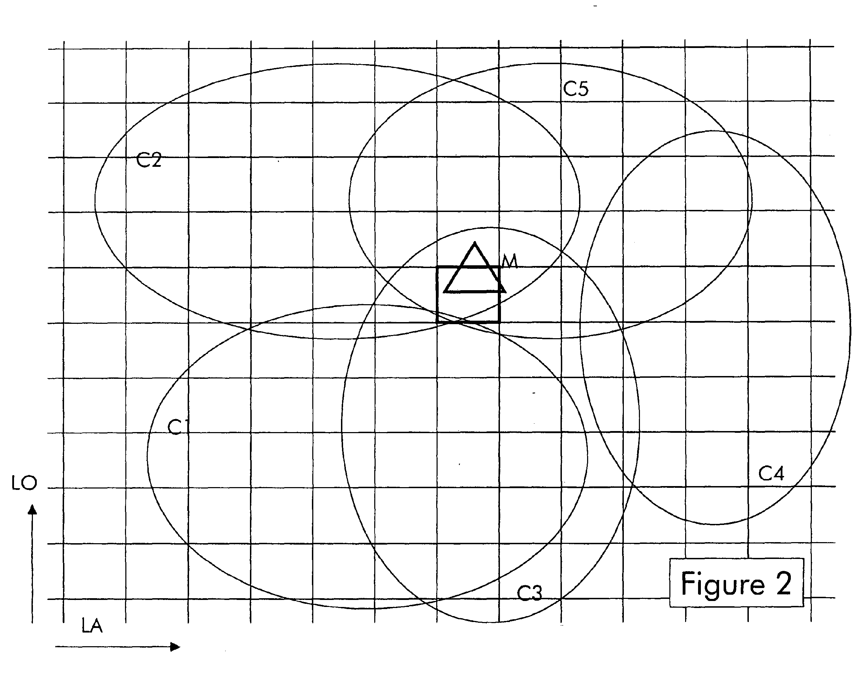

Figure. 2 illustrate a representation of the coverage information shown in figure 1. For simplicity reasons a two-dimensional Cartesian coordinate system is assumed as coverage space. Any (uniform) coordinate system reflecting the physical topology of the access point coverage is suited for that purpose. The shown coordinate system has two axes, longitude LO and latitude LA. For the principle it does not matter whether the Universal Transverse Mercator (UTM) grid presents the intuitive geographic position.

The figure illustrates a discrete presentation of the coverage. Each of the coverage C1, .... , C5 serve a set of fields. The field where the mobile M is located is shown by a bold face quadrate. And the relevant information for the retrieval method is that this field is served by C3, C2, and C5.

A simple form of the information system according to the invention might realized as the following relational database schema:

### Coverage (Longitude, Latitude, Connection Type)

Longitude and Latitude model a Cartesian coordinate system, i.e. a simple topology (consisting of unions of grids). The connection type might be more complex, e.g. comprising technology, frequencies, calibration information, bandwidth, quality of service information, access node identifiers, handover control information etc.

For instance in figure two there are two types of access nodes, shown by different shapes, rectangles for UMTS, say, and diamonds for Bluetooth.

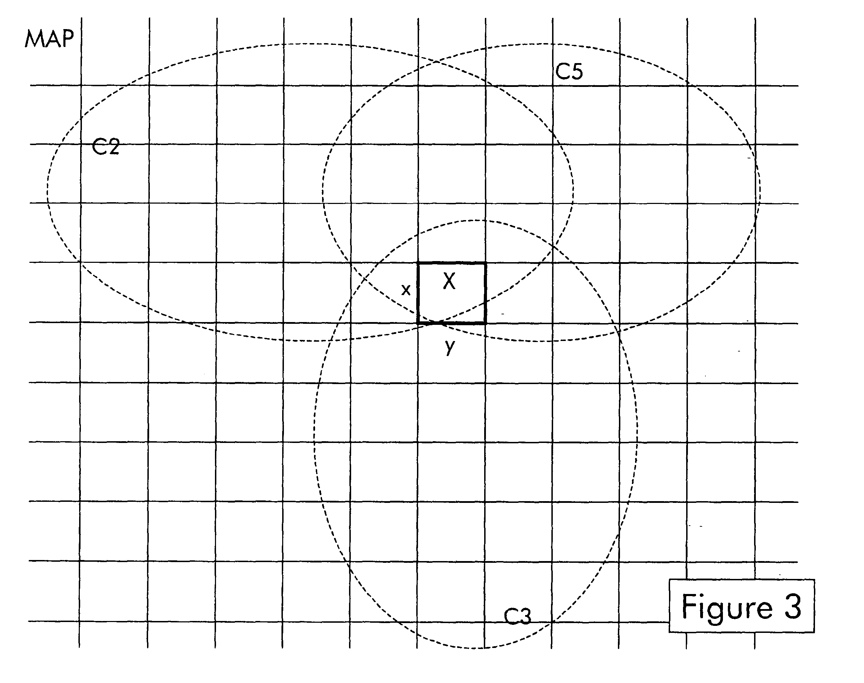

Figure 3 shows the local relevant information MAP, i.e. the part of the information that is relevant for the field X where the mobile M is located.

A corresponding database cutout might be

| **Longitude** | **Latitude** | **Connection Type** |
|---|---|---|
| X.x | X.y | WiFi, N2 |
| X.x | X.y | WiMax, N5 |
| X.x | X.y | WiMax, N3 |

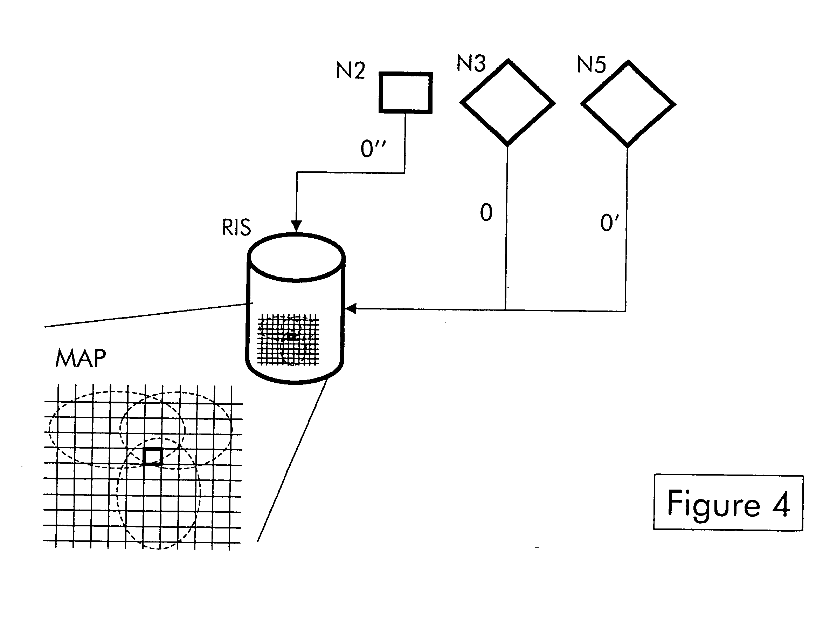

Figure. 4 illustrate the collaboration according the method for providing within a telecommunication network available network connection types according to the invention. I.e. how the information comes into the database. Naturally this is either fixed information, e.g. provided by a network plan, or is even is done by the access nodes dynamically, e.g. when they go online. This decreases heavily the maintenance efforts and increases the consistence of the information system. It further enables mobile access points. Whenever information of the access point changes e.g. its coverage e.g. by motion or by failure, the access point has to update, i.e. maintain the information system in order to keep the database integer and consistent.

The figure shows the three access nodes N2, N3, and N5 of the environment in focus and a database server RIS storing the local relevant information MAP. Each of the access nodes provide in an initial step 0, 0', and 0" its coverage and its connection type information.

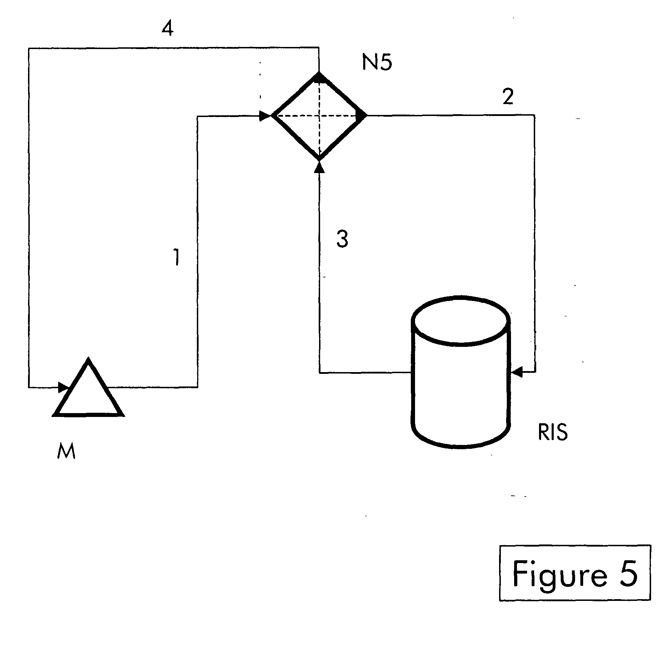

Figure. 5 illustrate the collaboration according the method for retrieving within a telecommunication network available network connection types according to the invention. The mobile M requests the retrieval in a first step via an initial access node N5, say, by providing its position X. This access node forwards 2 the request to the information system RIS, or more specifically, to a responsible server of the information system. This server, i.e. the information system RIS replies 3 and 4 via the access bode N5 with the available connection types at the mobile's position X to the mobile.

Afterwards the mobile has the information about all available connection types - even without scanning.

In a special implementation of this invention, the domain name system (DNS) might be used as database. The geographical position of the coverage, e.g. retrieved via GPS, might be converted into a domain name or into a set of domain names.

One possible example of such a conversion might be
- UMT: position North 49° 0' 1 " / East 9° 12' 2" into N.49.0.1.E.9.12.2 or into N.1.0.49.E.2.12.9 in order to support the identification search by providing most significant digits before less significant digits.

Similarly, two points could specify covered rectangles.

A terminal then can query with this domain name presenting the rectangle containing the rendered geographical position of the terminal. The domain name server than might return a list of resource records with the available (radio) technologies for the given geographical location.

Each record can contain different information fields like the radio technology, the used frequency bands and/or channels, the name of the network operator and other information. The DNS system can either be populated manually or automatically, where e.g. each access point fills in the data in the DNS system.

## Claims

1. A method for retrieving within a telecommunication network available network connection types at a given location (X) provided by access points (N1, ..., N5) by means of a telecommunication network device (M), comprising:
- on access point provides information about its coverage (C1, ..., C5) and its connection type to on information system (RIS),
- the available network connection types at a given location are stored in the information system (RIS),
- the telecommunication network device establishes at least one connection towards said information system (RIS), and
- queries (1, 2, 3, 4) for information about available network connection types using the given location (X).

2. The method according to claim 1, **characterized in, that** the information system (RIS) is decomposed and the decomposition reflects the neighborhood, where the method comprises additionally the distribution of the query based on the given location (X).

3. The method according to claim 1, **characterized in, that** the location is provided in uniform coordinates.

4. The method according to claim 3, **characterized in, that** the location is mapped onto a domain name for identifying a connection type.

5. The method according to claim 1, **characterized in, that** a connection type comprises an access technology.

6. The method according to claim 1, **characterized in, that** a connection type comprises an access media.

7. The method according to claim 1, **characterized in, that** a connection type comprises an access point.

8. The method according to claim 1, **characterized in, that** a connection type comprises coverage information.

9. An information system (RIS) comprising a server, **characterized by** comprising means for storing information about available network connection types per location, for retrieving and providing within a telecommunication network available network connection types according to the method of claim 1 and claim 8.

10. A server as a port of an information system according to claim 9.

11. An access point providing within a telecommunication network available network connection types at a given location, **characterized by** comprising means for providing its coverage (C1, ..., C5) and its connection type to on information system (RIS) for retrieving available network connection type according to claim 1.

12. A telecommunication device, **characterized by** comprising means for retrieving within a telecommunication network information about available network connection types according to claim 1.

## Patentansprüche

1. Verfahren zum Abrufen verfügbarer Netzwerkverbindungstypen in einem Telekommunikationsnetzwerk an einem von den zugangspunkten (N1, ..., N5) angegebenen bestimmten Standort (X) durch eine Telekommunikationsnetzwerk-Vorrichtung, **dadurch gekennzeichnet, dass**:
- ein Zugangspunkt einem Informationssystem (RIS) Informationen über seinen Senderbereich (C1, ..., C5) und seinen Verbindungstyp bereitstellt,
- die verfügbaren Netzwerkverbindungstypen an einem bestimmten Standort im Informationssystem (RIS) gespeichert werden,
- die Telekommunikationsnetzwerk-Vorrichtung mindestens eine Verbindung zu diesem Informationssystem (RIS) einrichtet, und
- Abfragen (1, 2, 3, 4) nach Informationen zu verfügbaren Netzwerkverbindungstypen den bestimmten Standort (X) verwenden.

2. Verfahren gemäß Anspruch 1, **dadurch gekennzeichnet, dass** das Informationssystem (RIS) unterteilt wird und diese Unterteilung die Umgebung widerspiegelt, wobei das Verfahren zusätzlich die Verteilung der Abfrage auf der Basis des bestimmten Standorts (X) umfasst.

3. Verfahren gemäß Anspruch 1, **dadurch gekennzeichnet, dass** der Standort in einförmigen Koordinaten angegeben wird.

4. Verfahren gemäß Anspruch 3, **dadurch gekennzeichnet, dass** der Standort zur Identifikation des Verbindungstyps einem Domain-Namen zugeordnet wird.

5. Verfahren gemäß Anspruch 1, **dadurch gekennzeichnet, dass** ein Verbindungstyp eine Zugriffstechnologie umfasst.

6. Verfahren gemäß Anspruch 1, **dadurch gekennzeichnet, dass** ein Verbindungstyp ein Zugriffsmedium umfasst.

7. Verfahren gemäß Anspruch 1, **dadurch gekennzeichnet, dass** ein Verbindungstyp einen Zugangspunkt umfasst.

8. Verfahren gemäß Anspruch 1, **dadurch gekennzeichnet, dass** ein Verbindungstyp Informationen zum Senderbereich umfasst.

9. Informationssystem (RIS) mit einem Server, **dadurch gekennzeichnet, dass** es Mittel umfasst zum Speichern von Informationen über verfügbare Netzwerkverbindungstypen pro Standort sowie zum Abrufen und Bereitstellen verfügbarer Netzwerkverbindungstypen innerhalb eines Telekommunikationsnetzwerks gemäß dem Verfahren aus Anspruch 1 und Anspruch 8.

10. Server als Teil eines Informationssystems gemäß Anspruch 9.

11. Zugangspunkt, der verfügbare Netzwerkverbindungstypen innerhalb eines Telekommunikationsnetzwerks an einem bestimmten Standort bereitstellt, **dadurch gekennzeichnet, dass** er Mittel umfasst, über die einem Informationssystem (RIS) sein Senderbereich (C1, ..., C5) und sein Verbindungstyp bereitgestellt werden zum Abrufen der verfügbaren Netzwerkverbindungstypen gemäß Anspruch 1.

12. Telekommunikationsvorrichtung, **dadurch gekennzeichnet, dass** sie Mittel umfasst zum Abrufen von Informationen zu verfügbaren Netzwerkverbindungstypen innerhalb eines Telekommunikationsnetzwerks gemäß Anspruch 1.

## Revendications

1. Procédé de récupération, au sein d'un réseau de télécommunication, des types de connexion disponibles à un endroit donné (X) fournis par des points d'accès (N1, ..., N5) au moyen d'un dispositif de réseau de télécommunication (M), comprenant :
- un point d'accès fournissant des informations sur sa couverture (C1, ..., C5) et son type de connexion à un système d'information (RIS),
- les types de connexion de réseau disponibles à un endroit donné sont stockées dans le système d'information (RIS),
- le dispositif de réseau de télécommunication établit au moins une connexion avec ledit système d'information (RIS) et
- demande (1, 2, 3, 4) des informations sur les types de connexion de réseau disponibles en utilisant l'endroit donné (X).

2. Procédé selon la revendication 1, **caractérisé en ce que** le système d'information (RIS) est décomposé et la décomposition reflète le voisinage, le procédé comprenant en plus la distribution de la demande en se basant sur l'endroit donné (X).

3. Procédé selon la revendication 1, **caractérisé en ce que** l'endroit est fourni dans des coordonnées uniformes.

4. Procédé selon la revendication 3, **caractérisé en ce que** l'endroit est mappé en un nom de domaine pour identifier un type de connexion.

5. Procédé selon la revendication 1, **caractérisé en ce qu'**un type de connexion comprend une technologie d'accès.

6. Procédé selon la revendication 1, **caractérisé en ce qu'**un type de connexion comprend un support d'accès.

7. Procédé selon la revendication 1, **caractérisé en ce qu'**un type de connexion comprend un point d'accès.

8. Procédé selon la revendication 1, **caractérisé en ce qu'**un type de connexion comprend des informations de couverture.

9. Système d'information (RIS) comprenant un serveur, **caractérisé en ce qu'**il comprend des moyens pour stocker des informations sur les types de connexion de réseau disponibles par emplacement, pour récupérer et fournir, au sein d'un réseau de télécommunication, les types de connexion de réseau disponibles conformément au procédé selon la revendication 1 et la revendication 8.

10. Serveur faisant partie d'un système d'information selon la revendication 9.

11. Point d'accès fournissant, au sein d'un réseau de télécommunication, les types de connexion de réseau disponibles à un endroit donné, **caractérisé en ce qu'**il comprend des moyens pour fournir sa couverture (C1, ..., C5) et son type de connexion à un système d'information (RIS) en vue de récupérer les types de connexion de réseau disponibles conformément à la revendication 1.

12. Dispositif de télécommunication, **caractérisé en ce qu'**il comprend des moyens pour récupérer, au sein d'un réseau de télécommunication, des informations de réseau à propos des types de connexion de réseau disponibles conformément à la revendication 1.
